# EUROPÄISCHE PATENTSCHRIFT

(11) **EP 2 984 138 B1**
(45) Veröffentlichungstag und Bekanntmachung des Hinweises auf die Patenterteilung: **04.10.2017**
(21) Anmeldenummer: 14715917.2
(22) Anmeldetag: 08.04.2014
(51) Int. Cl.: C08L 67/02

(54) **POLYMERZUSAMMENSETZUNG**
POLYMER COMPOUND
COMPOSITION POLYMÈRE

(30) Priorität: 10.04.2013 DE 102013103614; 15.10.2013 DE 102013017024
(43) Veröffentlichungstag der Anmeldung: 17.02.2016
(73) Patentinhaber: BIOTEC Biologische Naturverpackungen GmbH & Co. KG, 46446 Emmerich (DE)
(72) Erfinder: SCHMIDT, Harald, 46446 Emmerich (DE); HESS, Christoph, 46459 Rees (DE); BRÉSO, Christophe, F-76200 Dieppe (FR); HACKFORT, Ralf, 46446 Emmerich (DE); RÖRTHMANS, Frank, 47661 Issum-Sevelen (DE); FRIEDEK, Wolfgang, 47551 Bedburg-Hau (DE)
(74) Vertreter: Cohausz & Florack
(86) Internationale Anmeldenummer: PCT/EP2014/057030
(87) Internationale Veröffentlichungsnummer: WO 2014/166938

(56) Entgegenhaltungen:
- WO-A1-02/16468
- WO-A1-2006/074815
- WO-A2-02/14430

## Beschreibung

Die Erfindung betrifft eine Polymerzusammensetzung sowie ein Verfahren zu deren Herstellung. Ferner betrifft die Erfindung die Verwendung der Polymerzusammensetzung zur Herstellung von Folien, Formteilen oder Fasern sowie derartige Erzeugnisse, welche die erfindungsgemäße Polymerzusammensetzung enthalten.

Unter dem Gesichtspunkt der Schonung fossiler Resourcen, der Abfallentsorgung und Minderung der CO₂-Emissione ist es wünschenswert, die weit verbreiteten herkömmlichen Kunststoffe auf Basis von fossilen Rohstoffquellen durch Kunststoffe zu ersetzen, die zumindest teilweise oder vollständig aus nachwachsenden Rohstoffen gewonnen werden können. Polymere, die zumindest teilweise oder vollständig auf nachwachsenden Rohstoffen basieren, werden auch "biobasierte" Polymere genannt.

Biologisch abbaubare Kunststoffe sind nicht zwangsläufig auch gleichzeitig biobasiert. So gibt es einige Kunststoffe aus fossilen, nicht nachwachsenden Ressourcen, die biologisch abbaubar sind. Die biologische Abbaubarkeit ist nicht an die Rohstoffbasis gebunden, sondern hängt allein von der chemischen Struktur des Werkstoffs und seinem Vermögen ab, sich durch biologische Aktivität in natürlich vorkommende Stoffwechselendprodukte umzuwandeln.

In der Praxis haben sich Polymerzusammensetzungen auf Basis von Stärke und aromatisch-aliphatischen Copolyestern als biologisch abbaubare Polymerzusammensetzungen mit hervorragenden mechanischen Eigenschaften bewährt.

Eine derartige weichmacherfreie thermoplastische Polymerzusammensetzung auf Stärkebasis, die sich insbesondere zur Blasfolienextrusion, Flachfolienextrusion und zum Spritzgießen von vollständig biologisch abbaubaren Produkten eignet, ist unter dem Handelsnamen "BIOPLAST^{®} GF 106/02" von der Firma BIOTEC GmbH & Co. KG in Emmerich (Deutschland) kommerziell erhältlich.

Die Herstellung und Eigenschaften von weichmacherfreien thermoplastischen Polymer-Blends auf Basis von Stärke und aromatisch-aliphatischen Copolyestern werden beispielsweise in den Druckschriften EP 0 596 437 B1 und EP 02 203 511 B1 beschrieben. Biologisch abbaubaren Polymerzusammensetzungen auf Basis von aliphaticharomatischen Copolyestern, Polymilchsäure und Polyhydroxyalkanaoaten oder Stärke sind von den Druckschiften WO 02/14430 A2 und WO 02/16468 bekannt. Die Hauptanwendungen biologisch abbaubarer Polymerzusammensetzungen liegen im Verpackungs- und Cateringbereich. Daneben existieren Anwendungen in der Landwirtschaft und im Gartenbau sowie im Pharma- und Medizinbereich. Besonders relevant sind biologisch abbaubare Polymerzusammensetzungen für die Fertigung von Abfallsäcken, Tragetaschen, Einweggeschirr (Becher, Tassen, Teller, Besteck), Verpackungsfolien, Flaschen, Obst- und Gemüseschalen (so genannte Trays), Verpackungshilfsmitteln (Loose-fill-Chips), Mulchfolien, Blumentöpfen und dergleichen.

Obwohl für manche Anwendungsbereiche (z.B. kompostierbare Mülltüten) ein möglichst hoher Gehalt an nachwachsenden Rohstoffen wünschenswert wäre, bestehen die bislang am Markt verfügbaren, vollständig biologisch abbaubaren Polymerzusammensetzungen und daraus hergestellte Folienprodukte überwiegend aus polymeren Werkstoffen fossilen Ursprungs, wie beispielsweise aliphatisch-aromatische Copolyester. Zur Sicherstellung akzeptabler mechanischer Kennwerte liegt der Gehalt an nachwachsenden Rohstoffen (z.B. Stärke) in diesen Polymerzusammensetzungen in der Regel deutlich unter 50 %.

Obwohl eine weitere Erhöhung des Stärkeanteils in bestehenden stärkebasierten Polymerblends aus wirtschaftlichen und ökologischen Gründen wünschenswert wäre, ist dies nicht ohne weiteres möglich, da eine Erhöhung des Stärkeanteils in der Regel mit einer erheblichen Verschlechterung der mechanischen Eigenschaften des Polymers einhergeht.

Neben Stärke und Stärkederivaten sind auch Polyhydroxyalkanoate (PHA) vielversprechende biobasierte Ersatzmaterialien für Polymere, die fossilen Ursprungs sind. PHAs sind natürlich vorkommende lineare Polyester aus Hydroxysäuren, die von vielen Bakterien als Reservestoffe für Kohlenstoff und Energie gebildet werden und in Form von Granula im Zellinneren abgelagert werden. Aus dem Stand der Technik ist die industrielle biotechnologische PHA-Erzeugung unter Verwendung von natürlichen oder genetisch modifizierten Bakterienstämmen oder Pflanzen bekannt. Eine Übersicht zu den verschiedenen PHAs und ihrer Herstellung bietet das Kapitel "Polyhydroxyalkanoates" in "Handbook of Biodegradable Polymers", Seiten 219 bis 256, Verlag Rapra Technologies Limited, 2005.

Ein wesentlicher Nachteil von PHAs ist jedoch, dass daraus hergestellte Folien relativ spröde bzw. brüchig sind und sich die mechanischen Eigenschaften diesbezüglich während der Lagerung der Folien weiter verschlechtern. So scheiterte der Einsatz größerer Mengen an vollständig biobasiertem PHA, wie z.B. PHB, PHBV und PHBH, in Folienrezepturen bislang vor allem an der unkontrollierten, langsamen Nachkristallisation der PHA-Polymere im Anschluss an deren Verarbeitung zu Folien. Die durch die Nachkristallisation entstehenden Sphärolithe wirken vermutlich als Störstellen in der Folie und scheinen so zu einem signifikanten Verlust wichtiger mechanischer Folieneigenschaften, wie z.B. Reißdehnung und Durchschlagfestigkeit, zu führen.

Aus dem Stand der Technik sind unterschiedliche Herangehensweisen zur Verbesserung der mechanischen Eigenschaften von PHA-enthaltenden Polymerzusammensetzungen bekannt, wobei vor allem im Bereich Spritzgießanwendungen Nukleierungsmittel, wie beispielsweise Bornitrid (BN), Talk-(Mg₃[Si₄O₁₀(OH)₂]) und Kalk- (CaCO₃) Partikel, Cyclodextrine, Polyvinylalkohol-Partikel, Terbiumoxid, Saccharin, Thymin, Uracil, Orotsäure oder Cyanursäure, zum Einsatz kommen. Die bekannten Verfahren haben gemein, dass durch Zugabe eines derartigen Nukleierungsmittels die Kristallkeimbildung und das Kristallwachstum beschleunigt werden. Hierdurch soll sichergestellt werden, dass schon beim Abkühlvorgang nach der Verarbeitung der PHA-enthaltenden Polymerzusammensetzung eine nahezu vollständige Kristallisation rasch eintritt und eine unkontrollierte Nachkristallisation dadurch unterbunden wird. Ferner führen die Nukleierungsmittel dazu, dass die Kristallisation an vielen Stellen gleichzeitig einsetzt, so dass sich keine großen Sphärolithe, sondern vielmehr viele kleine Kristallite bilden. Im Gegensatz zu Sphärolithen, an deren Trennflächen sich ausgeprägte, makroskopisch wirksame Strukturschwachstellen bilden können, wirkt sich eine hohe Kristallitdichte in der Regel nicht negativ auf die mechanischen Eigenschaften der Polymerzusammensetzungen aus.

Nachteilig am Einsatz von Nukleierungsmitteln ist jedoch, dass diese zusätzliche Kosten und Arbeitsaufwand verursachen. Darüber hinaus liefert der Einsatz von Nukleierungsmitteln bei PHA-enthaltenden Polymerzusammensetzungen bislang nur im Bereich Spritzgießanwendungen zufriedenstellende Ergebnisse. Im wichtigen Anwendungsbereich der Folienherstellung kann die Zugabe von Nukleierungsmitteln die verzögerte Nachkristallisation und damit verbundene Versprödung und Verschlechterung der mechanischen Eigenschaften während der Lagerung der Folien kaum verhindern. Dies liegt an der bei der kontinuierlichen Folienherstellung im Vergleich zum Spritzgießen meist sehr raschen Abkühlzeit der Schmelze, welche einem bei höheren Temperaturen deutlich schnelleren Auskristallisieren entgegenwirkt.

Bei der Folienherstellung aus PHA-enthaltenden Polymerzusammensetzungen bestand der erfolgversprechendste Weg bislang darin, die Menge an PHA möglichst gering zu halten und relativ große Mengen (z.B. größer 80 Gew.% bezogen auf die mit PHA gebildete Menge) einer synthetischen Polymerkomponente mit hervorragenden mechanischen Eigenschaften zuzumischen. Auch ist es bei derartigen Folien üblich, zur Sicherung zufriedenstellender mechanischer Kennzahlen, den Anteil biobasierter Polymere, wie beispielsweise Stärke, insgesamt möglichst gering, beispielsweise insgesamt unter 30 Gew.-% bezogen auf die Gesamtpolymerzusammensetzung, zu halten.

Diese Herangehensweise ist jedoch mit der Zielsetzung, den Anteil biobasierten Kohlenstoffs in Polymerzusammensetzungen möglichst hoch (z.B. größer als 50 %) zu halten, schwer bis gar nicht zu vereinbaren. Zum einen steuern bei gattungsgemäßen Polymerzusammensetzungen gerade das biotechnologisch hergestellte PHA und die Stärke den biobasierten Kohlenstoff bei. Darüber hinaus werden die meisten synthetischen Polymere, insbesondere auch die wegen ihrer biologischen Abbaubarkeit häufig eingesetzten aliphatisch-aromatischen Copolyester, bislang ausschließlich aus fossilen Rohstoffen hergestellt. Eine Erhöhung ihres Anteils würde folglich nur zu einer Verschlechterung der biobasierten Kohlenstoffbilanz führen. Ausgehend vom voranstehend erläuterten Stand der Technik bestand eine Aufgabe der Erfindung darin, eine Stärke-basierte biologisch abbaubare Polymerzusammensetzung bereitzustellen, die für die Biokohlenstoffbilanz der Zusammensetzung relevante Anteile an PHA enthält und trotzdem zu Folien verarbeitet werden kann, welche eine nur geringfügige bzw. deutlich verzögerte Nachkristallisation aufweisen. Eine weitere Aufgabe der Erfindung bestand darin, eine biologisch abbaubare Polymerzusammensetzung bereitzustellen, die einen möglichst hohen Anteil an biobasierten Polymeren, wie Stärke und PHA, bei gleichzeitig ausgezeichneten mechanischen Eigenschaften aufweist.

Diese Aufgabe wird erfindungsgemäß durch die in Anspruch 1 und 15 angegebene Polymerzusammensetzung, das in Anspruch 10 angegebene Verfahren, die in Anspruch 16 angegebene Verwendung sowie die in Anspruch 17 genannten Erzeugnisse gelöst.

Vorteilhafte Ausgestaltungen der Erfindung sind in den abhängigen Ansprüchen angegeben und werden nachfolgend wie der allgemeine Erfindungsgedanke im Einzelnen erläutert.

Die erfindungsgemäße Polymerzusammensetzung enthält bezogen auf das Gesamtgewicht der Polymerzusammensetzung wenigstens die folgenden Komponenten:
a) 5 bis 50 Gew.% destrukturierte Stärke und/oder Stärkederivat,
b) 20 bis 60 Gew.% aliphatisch-aromatischer Copolyester,
c) 10 bis 50 Gew.% Polyhydroxyalkanoat,
d) 3 bis 25 Gew.% Polymilchsäure.

Ein wesentliches Merkmal der erfindungsgemäßen Polymerzusammensetzung ist die Kombination relativ großer Mengen der biobasierten Polymere Stärke bzw. Stärkederivat (5 bis 50 Gew.%) und PHA (10 bis 50 Gew.%) mit 3 bis 25 Gew.-% Polymilchsäure. Überraschenderweise wurde festgestellt, dass die Gegenwart schon geringer Mengen Polymilchsäure, wie beispielsweise 3, 5 oder 7,5 Gew.-%, bei der Herstellung von Stärke- und PHA-haltigen polymeren Zusammensetzung zu einer wesentlichen Verbesserung der mechanischen Eigenschaften des Materials, insbesondere dessen Zugfestigkeit, Reißdehnung und/oder Dart-Drop-Werten gemessen nach 24 Stunden Lagerung, führt. Üblicherweise zeigen ähnliche Gemische bereits nach Ablauf von 24 Stunden ein im Vergleich zum frisch gefertigten Zustand deutlich verändertes mechanisches Profil (Aushärtung, Versprödung), welches auf die beschriebene, unkontrollierte Nachkristallisation zurückzuführen ist.

Ohne an eine bestimmte wissenschaftliche Theorie gebunden sein zu wollen, scheint die Zugabe von PLA der sonst bei PHA-enthaltenden Polymerzusammensetzungen auftretenden langsamen Nachkristallisation entgegenzuwirken. Erfindungsgemäße Polymerzusammensetzungen behalten trotz PHA-Anteilen von 10 bis 50 Gew.% ihre guten mechanischen Eigenschaften auch nach einer Lagerung von beispielsweise 24 h bei und zeigen so gut wie keine Versprödung. Der Effekt der PLA-Zugabe ist überraschend, da reines PLA als lineares teilkristallines Polymer selbst relativ spröde ist und daher nicht erwartet wurde, dass es einer Versprödung der Polymerzusammensetzung entgegen wirken könnte.

In einer bevorzugten Ausführungsform enthält die Polymerzusammensetzung, bezogen auf das Gesamtgewicht der Polymerzusammensetzung, wenigstens die folgenden Komponenten:
a) 5 bis 50 Gew.% destrukturierte Stärke und/oder Stärkederivat,
b) 20 bis 60 Gew.% aliphatisch-aromatischer Copolyester,
c) 10 bis 50 Gew.% Polyhydroxyalkanoat,
d) 5 bis 25 Gew.% Polymilchsäure.

Die erfindungsgemäße Polymerzusammensetzung zeichnet sich durch ausgezeichnete mechanische Eigenschaften aus. So weisen aus der Polymerzusammensetzung hergestellte Folien vorzugsweise eine Zugfestigkeit gemäß DIN 53455 von 5 bis 60 N/mm², insbesondere von 10 bis 40 N/mm² und/oder eine Reißdehnung gemäß DIN 53455 von 100 bis 800 %, insbesondere von 200 bis 600 %, auf.

Im Gegensatz zu den aus dem Stand der Technik bekannten Polymerzusammensetzungen mit vergleichbar hohen Anteilen an PHA behalten die aus der erfindungsgemäßen Polymerzusammensetzung hergestellten Folien diese mechanischen Eigenschaften auch während der Lagerung weitestgehend bei.

So ist es mit der erfindungsgemäßen Lehre erstmals möglich, stärkebasierte Polymerzusammensetzungen mit einem PHA-Gehalt von 10 bis 50 Gew.% herzustellen, wobei aus der Polymerzusammensetzung hergestellte Folien keine, eine nur geringfügige oder aber deutlich verzögerte Nachkristallisation aufweisen.

Zur Messung dieses Effekts werden nachfolgend die mechanischen Eigenschaften über die ersten 24 Stunden nach Folienherstellung betrachtet und angegeben. Diese Angaben beziehen sich auf einen Vergleich von Folienproben, die unmittelbar nach Folienherstellung untersucht wurden, und solchen, die 24 Stunden nach Folienherstellung untersucht wurden. Dabei bedeutet Folienherstellung, den Abschluss des Folienfertigungsprozesses (Zeitpunkt nach Wickler/Aufrollen der Folie und Abkühlen auf Raumtemperatur). "Unmittelbar nach Folienherstellung" bedeutet dabei innerhalb der ersten 30 Minuten nach Abschluss des Folienfertigungsprozesses.

Der Effekt einer nur geringfügigen Nachkristallisation der erfindungsgemäßen Folien ist für den Fachmann unmittelbar feststellbar, wenn er eine solche Folie nach 24 Stunden Lagerung mit den Händen berührt und auseinanderzieht bzw. reißt. Die erfindungsgemäße Folie fühlt sich nach wie vor weich und elastisch an und zeigt keine bzw. nur geringfügige Anzeichen von Versprödung im Vergleich zu dem Zustand der Folie unmittelbar nach deren Herstellung. Im Gegensatz hierzu fühlen sich Vergleichsfolien aus dem Stand der Technik, die gleich hohe Anteile an PHA, jedoch kein oder kleiner 3 Gew.-% PLA enthalten, nach 24 Stunden Lagerung hart und spröde an und reißen schnell ein.

Das Merkmal "keine oder nur geringfügige Nachkristallisation" kann nicht nur qualitativ sonder auch quantitativ mittels DSC (Differential Scanning Calorimetry) nachgewiesen werden. Wird eine Polymerprobe einem definierten Aufheiz-/Abkühlprogramm unterzogen, so werden Phasenübergänge, welche mit einem Energieumsatz verbunden sind (Glasübergang, Kristallisation, Schmelzen, etc.), in Form exothermer (z.B. Kristallisation) oder endothermer (z.B. Schmelzen) Peaks aufgezeichnet. Voraussetzung für das Erscheinen eines Peaks in der DSC-Messung ist folglich, dass der Phasenübergang während der Messung, also beim Durchlaufen des Temperaturprogramms erfolgt. So erzeugt eine amorphe Probe, welche während des Aufheizens kristallisiert, einen exothermen Peak. Ist die Kristallisation der Probe jedoch bereits vor der Messung erfolgt (z.B. während der Lagerung der Probe), so ist der Energieumsatz des Phasenübergangs vor Beginn der DSC-Messung bereits erfolgt und erzeugt den entsprechenden Energieumsatz und den damit verbundenen Peak während der Messung dann nicht mehr.

So lassen sich bei frisch verarbeiteten, PHA-basierten Materialien in der DSC beim ersten Aufheizen meist Kristallisationspeaks detektieren (die in das Messgerät eingebrachte Probe ist noch weitestgehend amorph und kristallisiert während der Messung). Dagegen zeigt ein über mehrere Stunden/Tage gelagertes (und während der Lagerung nachkristallisiertes) Material der gleichen Zusammensetzung diesen Peak nicht mehr bzw. nur noch in abgeschwächter Form. Die Existenz von Kristalliten im Material ist durch das Erscheinen von (endothermen) Schmelzpeaks nach Erreichen der Schmelztemperatur während der DSC-Messung nachweisbar. Für das Schmelzen (Zerstören) von Kristalliten wird der beim Kristallisieren zuvor freigewordene Energiebetrag wieder benötigt und erscheint daher als endothermer Schmelzpeak im DSC-Diagramm. Die Größe (Fläche) der Kristallisations- bzw. Schmelzpeaks kann mittels gängiger Software zur Auswertung von DSC-Diagrammen bestimmt und verglichen werden.

Gemäß einer Ausführungsform zeigen erfindungsgemäße Folien eine nur geringe Nachkristallisation innerhalb der ersten 24 Stunden nach Lagerung. Dies ist dadurch gekennzeichnet, dass die Größe (Fläche) des Kristallisationspeaks gemessen 24 Stunden nach Lagerung um höchstens 60 %, bevorzugt höchstens 50 %, besonders bevorzugt höchstens 40 % oder 30 %, abgenommen hat, verglichen mit der Größe (Fläche) des Kristallisationspeaks gemessen unmittelbar nach Folienherstellung.

Die erfindungsgemäßen Polymerzusammensetzungen lassen sich gemäß einer anderen Ausführungsform auch dadurch kennzeichnen, dass der Kristallinitätsgrad einer aus der Polymerzusammensetzung hergestellten Folie in den ersten 24 Stunden nach Herstellung um höchstens 20 Prozentpunkte, insbesondere höchstens 15 bzw. höchstens 10 Prozentpunkte zunimmt. Bei einem Kristallinitätsgrad unmittelbar nach Folienherstellung von beispielsweise 40 % bedeutet eine Zunahme von 20 Prozentpunkten, dass der nach 24 Stunden gemessene Kristallinitätsgrad 60 % beträgt. Die Begriffe Kristallinitätsgrad, Kristallisationsgrad und Kristallinität werden in der Literatur als Synonyme verwendet und bezeichnen den kristallinen Anteil eines teilkristallinen Feststoffes.

Die vorstehend angegebenen Kristallisationsgrade sind gewichts- und nicht volumenbezogen und werden durch Bestimmung der technischen Schmelzwärme kalorimetrisch ermittelt (vgl. beispielsweise Adolf Franck: Kunststoff-Kompendium, Vogel Buchverlag, 6. Auflage, Kapitel 3.2.4 auf Seite 92 und 93 oder Menges et al.: Werkstoffkunde Kunststoffe, Hanser Verlag, 5. Auflage, Kapitel 8.2.4.2, Seite 263 bis 265).

Die unterbleibende bzw. nur geringfügige Nachkristallisation lässt sich bei den erfindungsgemäßen Polymerzusammensetzungen auch mikroskopisch feststellen. Versuche haben gezeigt, dass bei erfindungsgemäßen Polymerzusammensetzungen insbesondere eine nachträgliche (d.h. während der Lagerung stattfindende) Sphärolithenbildung weitestgehend unterbunden bzw. stark verzögert und reduziert wird.

Sphärolithe sind radialsymmetrische Kristallaggregate und stellen für teilkristralline thermoplastische Kunststoffe typische Überstruktureinheiten dar. Die Größe und die Anzahl der Sphärolithe in einem Polymer beeinflusst die mechanischen Eigenschaften des Kunststoffs. Nachteilig an den im Stand der Technik beschriebenen PHA-enthaltenden Polymerzusammensetzungen ist, dass sich bei deren Lagerung Sphärolithe durch Nachkristallisation bilden. Die mechanischen Eigenschaften der Folien stimmen nach Lagerung und Auslieferung an den Kunden dadurch häufig nicht mehr mit den ursprünglich direkt nach der Herstellung gemessenen Werten überein. Insbesondere tritt eine deutliche Verschlechterung der Zugfestigkeit, Reißdehnung und Dart-Drop-Werte ein. Dies ist vermutlich auf die makroskopisch wirksamen Störstellen (Grenzflächen bzw. Kanten der Sphärolithe) in der Folie zurückzuführen. Gemäß einer Ausführungsform der Erfindung zeigen Folien, die erfindungsgemäße Polymerzusammensetzungen enthalten, auch nach 24 Stunden Lagerung post Herstellung, betrachtet durch ein Polarisationsmikroskop, weniger als 5 Sphärolithe auf einer Fläche von 100 µm x 100 µm (Durchschnitt von 10 Auswertungen entsprechender Bildausschnitte). Da Sphärolithe kristalline Bereiche darstellen und damit doppelbrechend sind, lassen sie sich mit Hilfe der Polarisationsmikroskopie nachweisen. Das Erscheinungsbild ist unterschiedlich und abhängig von der genauen Polymerzusammensetzung. Man erkennt Sphärolithe in der Regel als kreisrunde Objekte und/oder anhand des typischen Musters ("Malteserkreuz"), dessen dunkle Balken parallel zur Polarisationsrichtung von Polarisator und Analysator des Mikroskops ausgerichtet sind.

Die unterbleibende, nur geringfügige oder stark verzögerte Nachkristallisation zeigt sich bei den erfindungsgemäßen Polymerzusammensetzungen auch daran, dass sich wichtige mechanische Kennwerte während der Lagerung der Polymerzusammensetzung und/oder daraus hergestellter Folien nicht bzw. nur unwesentlich verschlechtern.

So haben praktische Versuche gezeigt, dass die Zugfestigkeit, ein Maß für die Folienhärte, gemessen nach DIN EN ISO 527 einer aus der erfindungsgemäßen Polymerzusammensetzung hergestellten Folie über die ersten 24 Stunden nach Folienherstellung weitestgehend stabil bleibt. Weitestgehend stabil bedeutet dabei insbesondere, dass die Zugfestigkeit um höchstens 20 %, bevorzugt höchstens 15 %, bzw. höchstens 10 % oder 5 % zunimmt. Vorzugsweise bleibt die Zugfestigkeit gemessen nach DIN EN ISO 527 einer aus der erfindungsgemäßen Polymerzusammensetzung hergestellten Folie auch 14 Tage nach Folienherstellung weitestgehend stabil.

Auch der Dart-Drop-Wert, ein Maß für die Durchschlagfestigkeit, gemäß ASTM D-1709 einer aus der erfindungsgemäßen Polymerzusammensetzung hergestellten Folie bleibt über die ersten 24 Stunden nach Folienherstellung weitestgehend stabil. Weitestgehend stabil bedeutet hierbei insbesondere, dass der Dart-Drop-Wert um höchstens 20 %, bevorzugt höchstens 15 %, bzw. höchstens 10 % oder 5 % abnimmt. Vorzugsweise bleibt der Dart-Drop-Wert gemessen nach ASTM D-1709 einer aus der erfindungsgemäßen Polymerzusammensetzung hergestellten Folie auch 14 Tage nach Folienherstellung weitestgehend stabil.

Ferner zeichnen sich erfindungsgemäße Polymerzusammensetzung dadurch aus, dass die Reißdehnung, ein Maß für die Elastizität, gemäß DIN 53455 einer aus der Polymerzusammensetzung hergestellten Folie über die ersten 24 Stunden nach Folienherstellung weitestgehend stabil bleibt. Weitestgehend stabil bedeutet hierbei insbesondere, dass die Reißdehnung um höchstens 15 %, bevorzugt höchstens 10 %, bzw. höchstens 5 % abnimmt. Vorzugsweise bleibt die Reißdehnung gemessen nach DIN 53455 einer aus der erfindungsgemäßen Polymerzusammensetzung hergestellten Folie auch 14 Tage nach Folienherstellung weitestgehend stabil.

Bemerkenswert in Bezug auf die erfindungsgemäßen Polymerzusammensetzungen sind die guten Reißfestigkeitswerte in Extrusionsrichtung (MD, machine direction, Maschinenlaufrichtung), die sich auch innerhalb von 24-stündiger Lagerung nach Folienherstellung nicht gravierend verschlechtern. Bei aus dem Stand der Technik bekannten Polymerzusammensetzungen mit ähnlich hohen Anteilen an PHA ist vor allem eine kurzfristige Verschlechterung der Reißfestigkeit in Extrusionsrichtung zu beobachten. In Extrusionsrichtung macht sich die unerwünschte Nachkristallisation besonders bemerkbar, da sich lineare Polymere wie PHA in Extrusionsrichtung ausrichten und auch in dieser Richtung kristallisieren, wodurch die Weiterreißfestigkeit in Extrusionsrichtung im Vergleich zu der Querrichtung erheblich verschlechtert wird.

Gemäß einer weiteren Ausführungsform sind die erfindungsgemäßen Polymerzusammensetzungen dadurch gekennzeichnet, dass die Reißfestigkeit in Extrusionsrichtung (MD) gemäß DIN 53455 einer aus der Polymerzusammensetzung hergestellten Folie über die ersten 24 Stunden nach Folienherstellung weitestgehend stabil bleibt. Weitestgehend stabil bedeutet hierbei insbesondere, dass die Reißfestigkeit in Extrusionsrichtung (MD) um höchstens 20 %, bevorzugt höchstens 15 %, bzw. höchstens 10 % oder 5 % abnimmt.

Gemäß einer bevorzugten Ausführungsform der Erfindung ist die erfindungsgemäße Polymerzusammensetzung gemäß EN 13432 biologisch abbaubar, insbesondere vollständig biologisch abbaubar.

Gemäß einer weiteren bevorzugten Ausführungsform der Erfindung besitzt die erfindungsgemäße Polymerzusammensetzung thermoplastische Eigenschaften. Vorzugsweise ist die Polymerzusammensetzung thermoplastisch verarbeitbar.

Die zur Herstellung der erfindungsgemäßen Polymerzusammensetzung verwendete Stärke bzw. das Stärkederivat ist vorzugsweise aus Kartoffel, Mais, Tapioka oder Reis gewonnen. Stärkederivat, wie hier verwendet, bedeutet modifizierte bzw. funktionalisierte Stärke. Als Stärkederivat wird vorzugsweise Stärke eingesetzt, deren freie OH-Gruppen zumindest teilweise substituiert sind. In Frage kommt beispielsweise mit Ether und/oder Estergruppen modifizierte Stärke. Weitere Beispiele für geeignete Stärkederivate sind hydrophobierte oder hydrophilisierte Stärke, insbesondere z.B. Hydroxypropyl-Stärke oder Carboxymethylstärke.

Vorzugsweise wurde die in der erfindungsgemäßen Polymerzusammensetzung enthaltene destrukturierte Stärke bei der Herstellung der Polymerzusammensetzung aus nativer Kartoffelstärke, Tapiokastärke, Reisstärke und Maisstärke durch mechanische und/oder thermische Destrukturierung gebildet.

Erfindungsgemäß enthält die Polymerzusammensetzung 10 bis 50 Gew.%, bezogen auf das Gesamtgewicht der Polymerzusammensetzung destrukturierte Stärke und/oder Stärkederivat. Gemäß einer bevorzugten Ausführungsform der Erfindung enthält die Polymerzusammensetzung 15 bis 50 Gew.%, vorzugsweise 20 bis 50 Gew.%, noch bevorzugt 20 bis 45 Gew.%, noch bevorzugter 25 bis 45 Gew.%, am bevorzugtesten 25 bis 40 Gew.% destrukturierte Stärke und/oder Stärkederivat, jeweils bezogen auf das Gesamtgewicht der Polymerzusammensetzung. Wenn hier von "Stärke und/oder Stärkederivat" die Rede ist, so sind damit auch Mischungen verschiedener Stärken und/oder verschiedener Stärkederivate mit umfasst.

In der erfindungsgemäßen Polymerzusammensetzung liegt die Stärke bzw. das Stärkederivat in destrukturierter Form vor. Destrukturiert bedeutet dabei, dass die granuläre, kristalline Struktur von nativer Stärke vollständig oder zumindest weitestgehend zerstört worden ist. Dies lässt sich beispielsweise bei Betrachtung von Blendquerschnitten im Rasterelektronenemikroskop leicht feststellen. Alternativ kann die Stärkephase der Polymerzusammensetzung isoliert werden und unter einem Polarisationsmikroskop auf das Vorhandensein von kristallinen Bestandteilen hin untersucht werden.

Von destrukturierter Stärke im Sinne dieser Erfindung sind Fälle zu unterscheiden, in denen native Stärke lediglich als Füllstoff verwendet wird und die granuläre Struktur der Stärke zumindest teilweise erhalten bleibt.

Destrukturierte Stärke kann zweckmäßigerweise in Form von (ggf. vorgefertigter) weichmacherhaltiger thermoplastischer Stärke (TPS) in der erfindungsgemäßen Polymerzusammensetzung vorliegen. Bevorzugt ist die destrukturierte Stärke in der erfindungsgemäßen Polymerzusammensetzung jedoch möglichst weichmacherfrei.

Um auch ohne Zugabe von Kohlenstoff-haltigen Weichmachern destrukturierte Stärke erhalten zu können, wird native Stärke vorzugsweise zusammen mit mindestens einem hydrophoben Polymer und bei einem ausreichend hohen Wassergehalt unter Einwirkung hoher Scherkräfte und Temperaturen homogenisiert. Das Wasser wird vorzugsweise während oder am Ende des Homogenisierens wieder durch Trocknung entfernt. Die Herstellung einer derartigen weichmacherfreien destrukturierten Stärke in Polymer-Blends mit aromatisch-aliphatischen Copolyestern ist beispielsweise in den Druckschriften EP 0 596 437 B1 und EP 02 203 511 B1 beschrieben.

Die erfindungsgemäße Polymerzusammensetzung enthält gemäß einer bevorzugten Ausführungsform weniger als 5 Gew.%, noch bevorzugter weniger als 2,5 Gew.% und am bevorzugten weniger als 1 Gew.% oder weniger als 0,5 Gew.% Kohlenstoff-enthaltende Weichmacher. Gemäß einer Ausführungsform sind diese Kohlenstoff-enthaltende Weichmacher Glycerin und/oder Sorbitol. Weitere Beispiele für Kohlenstoff-enthaltende Weichmacher sind Arabinose, Lycose, Xylose, Glykose, Fructose, Mannose, Allose, Altrose, Galactose, Gulose, lodose, Inosit, Sorbose, Talit und Monoethoxylat-, Monopropoxylat- und Monoacetat-Derivate hievon sowie Ethylen, Ethylenglykol, Propylenglykol, Ethylendiglykol, Propylendiglykol, Ethylentriglykol, Propylentriglykol, Polyethylenglylcol, Polypropylenglykol, 1,2-Propandiol, 1,3-Propandiol, 1,2-, 1,3-, 1,4-Butandiol, 1,5-Pentandiol, 1,6-, 1,5-Hexandiol, 1,2,6-, 1,3,5-Hexantriol, Neopentylglykol, Trimethilolpropan, Pentaerithritol, Sorbit und deren Acetat-, Ethoxylat- und Propoxylat-derivate.

Die erfindungsgemäße Polymerzusammensetzung enthält ferner bevorzugt weniger als etwa 10 Gew.% niedermolekulare Substanzen und ist dadurch im wesentlichen weichmacherfrei. Unter niedermolekularen Substanzen im Sinne der Erfindung werden Substanzen mit einem Molekulargewicht kleiner 500 g/mol, insbesondere kleiner 250 g/mol, verstanden. Niedermolekulare Substanzen im Sinne der Erfindung sind insbesondere Wasser, Glycerin, Sorbitol und/oder Mischungen daraus.

Gemäß einer bevorzugten Ausführungsform der Erfindung enthält die erfindungsgemäße Polymerzusammensetzung weniger als 7 Gew.%, insbesondere weniger als 5 Gew.%, vorzugsweise weniger als 3 Gew.% bzw. 1,5 Gew.%, bezogen auf die Gesamtzusammensetzung, niedermolekulare Substanzen.

Die erfindungsgemäße Polymerzusammensetzung enthält 20 bis 60 Gew.%, besonders bevorzugt 30 bis 58 Gew.%, noch bevorzugter 30 bis 55 Gew.%, am bevorzugtesten 30 bis 50 Gew.% aliphatisch-aromatischen Copolyester, jeweils bezogen auf das Gesamtgewicht der Polymerzusammensetzung. Wenn hier von "aliphatisch-aromatischem Copolyester" die Rede ist, so sind damit auch Mischungen verschiedener aliphatisch-aromatischer Copolyester umfasst.

Für die erfindungsgemäße Polymerzusammensetzung kommen insbesondere aliphatisch-aromatische Copolyester in Frage, die gemäß EN 13432 biologisch abbaubar sind und/oder eine Glasübergangstemperatur (Tg) kleiner 0°C, insbesondere kleiner -4°C, weiter bevorzugt kleiner -10°C, noch weiter bevorzugt kleiner -20°C und am bevorzugtesten kleiner -30°C aufweisen. Die in der erfindungsgemäßen Polymerzusammensetzung enthaltenen aliphatisch-aromatischen Copolyester sind ferner vorzugsweise thermoplastisch.

Gemäß einer besonders bevorzugten Ausführungsform der Erfindung wird als aliphatisch-aromatischer Copolyester, ein statistischer Copolyester auf Basis von mindestens Adipinsäure und/oder Sebacinsäure eingesetzt. Weiter bevorzugt handelt es sich um einen Copolyester bzw. statistischen Copolyester auf Basis von 1,4-Butandiol, Adipin- bzw. Sebacinsäure und Terephthalsäure bzw. Terephthalsäurederivat (z. B. Dimethylterephthalat DMT). Dieser kann insbesondere eine Glasübergangstemperatur (Tg) von -25 bis -40 °C, insbesondere -30 bis -35 °C, und/oder einen Schmelzbereich von 100 bis 120 °C, insbesondere 105 bis 115 °C, aufweisen.

Gemäß einer weiteren Ausführungsform der Erfindung ist der aliphatisch-aromatische Copolyester im Wesentlichen aus fossilen Rohstoffen hergestellt und enthält gemäß ASTM 6866 weniger als 5 % biobasierten Kohlenstoff.

Die erfindungsgemäße Polymerzusammensetzung enthält 10 bis 50 Gew.% Polyhydroxyalkanoat, bezogen auf das Gesamtgewicht der Polymerzusammensetzung. Gemäß einer bevorzugten Ausführungsform enthält die Polymerzusammensetzung 15 bis 45 Gew.%, insbesondere 15 bis 40 Gew.%, weiter bevorzugt 15 bis 35 Gew.%, noch bevorzugter 15 bis 30 Gew.% Polyhydroxyalkanoat, jeweils bezogen auf das Gesamtgewicht der Polymerzusammensetzung. Wenn hier von "Polyhydroxyalkanoat" die Rede ist, so sind damit auch Mischungen verschiedener Polyhydroxyalkanoate umfasst.

Ein besonderer Aspekt der erfindungsgemäßen Polymerzusammensetzung ist, dass sie Polyhydroxyalkanoate in einer Menge von 10 Gew.% oder mehr, insbesondere auch 12,5 Gew.% oder mehr, bevorzugt 15, 18, 19 oder 20 Gew.% oder mehr enthalten kann, ohne dass die aus der Polymerzusammensetzung hergestellten Erzeugnisse, wie beispielsweise Folien, eine erhebliche Nachkristallisation oder Versprödung während der Lagerung erfahren.

Die erfindungsgemäße Lehre erlaubt es erstmals, größere Mengen an Polyhydroxyalkanoat in eine Stärke-basierte Polymerzusammensetzung einbringen zu können, ohne eine gravierende Verschlechterung der mechanischen Kennwerte in Kauf nehmen zu müssen. Hierdurch besteht die Möglichkeit, die Anteile an Polyhydroxyalkanoat und destrukturierter Stärke bzw. Stärkederivat soweit zu erhöhen, dass die erfindungsgemäße Polymerzusammensetzung gemäß ASTM 6866 mindestens 50 % biobasierten Kohlenstoff enthält und trotzdem noch zufriedenstellende mechanische Eigenschaften besitzt.

Eine zweckmäßige Größe für die biobasierte Kohlenstoffbilanz der erfindungsgemäßen Polymerzusammensetzung ist das Mengenverhältnis von Polyhydroxyalkanoat (dieses ist in der Regel biobasiert) zu der Menge an vorhandenem aliphatisch-aromatischer Copolyester (dieser ist üblicherweise fossilen Ursprungs) bzw. deren Gesamtmenge. Gemäß einer besonders bevorzugten Ausführungsform der Erfindung beträgt die in der Polymerzusammensetzung enthaltene Menge an Komponenten c) [Polyhydroxyalkanoat] mindestens 20 Gew.%, bezogen auf die Gesamtmenge der in der Polymerzusammensetzung enthaltenen Komponenten b) und c) [Gesamtmenge an aliphatisch-aromatischem Copolyester und Polyhydroxyalkanoat].

Wenn hier von Polyhydroxyalkanoat die Rede ist, so sind damit Polyhydroxyfettsäuren gemeint, die Monomere mit einer Kettenlänge von mindestens 4 C-Atomen enthalten. Polymilchsäure ist somit z.B. kein Polyhydroxyalkanoat im Sinne der Erfindung, Poly-3-hydroxybutyrat (PHB) oder Poly-4-hydroxybutyrat (P4HB) hingegen schon.

Erfindungsgemäß wird als Polyhydroxyallzanoat vorzugsweise ein Polyhydroxyalkanoat eingesetzt, das sich wiederholende Monomereinheiten der Formel (1) umfasst

[-0-CHR-CH₂-CO-] (1),

wobei R eine Alkylgruppe der Formel CₙH₂ₙ₊₁ bedeutet und n eine Zahl von 1 bis 15, bevorzugt von 1 bis 6 ist.

Optimale Ergebnisse stellen sich ein, wenn das Polyhydroxyalkanoat ausgewählt ist aus Poly-3-hydroxybutyrat (PHB), 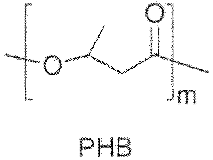 Poly(3-hydroxybutyrat-co-3-hydroxyvalerat) (PHBV), 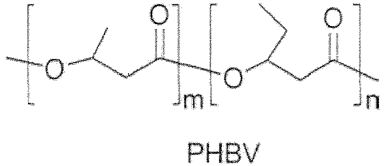 und Poly(3-hydroxybutyrat-co-3-hydroxyhexanoat)(PHBH) 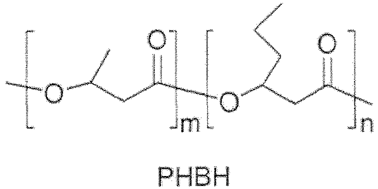 und Mischungen daraus.

Besonders gute Ergebnisse stellen sich ein, wenn das Verhältnis m:n in obigen Strukturformeln von 95:5 bis 85:15 beträgt, besonders bevorzugt von 90:10 bis 88:12. Gemäß einer besonders bevorzugten Ausführungsform enthält das Polyhydroxyalkanoat PHBH oder besteht daraus. Praktische Versuche haben gezeigt, dass ein PHBH mit einem Molanteil 3-Hydroxyhexanoat von 5 bis 15 Mol%, besonders bevorzugt 7 bis 13 Mol% oder 10 bis 13 Mol%, jeweils bezogen auf die Gesamtmenge PHBH, sehr gute Ergebnisse liefert.

Besonders praxisrelevante Ergebnisse können erzielt werden, wenn als Polyhydroxyalkanoat eine Mischung aus Polycaprolacton und einem weiteren Polyhydroxyalkanoat, insbesondere PHBH, verwendet wird. Experimente haben gezeigt, dass Mischungen verschiedener Polyhydroxyalkanoate, die von 10 bis 20 Gew.%, bevorzugt von 12 bis 18 Gew.%, jeweils bezogen auf die Gesamtmenge an Polyhydroxyalkanoat, enthalten, sehr gute Ergebnisse liefern.

Gemäß einer bevorzugten Ausführungsform ist das Polyhydroxyalkanoat biobasiert und/oder biotechnologisch hergestellt.

Polyhydroxyalkanoate im Sinne dieser Erfindung weisen insbesondere Molekulargewichte Mw von 70 000 bis 1 000 000, vorzugsweise von 100 000 bis 1 000 000 bzw. von 300 000 bis 600 000 und/oder Schmelzpunkte im Bereich von 100 bis 190 °C auf.

Die erfindungsgemäße Polymerzusammensetzung enthält 3 bis 25 Gew.% Polymilchsäure, bezogen auf das Gesamtgewicht der Polymerzusammensetzung. Gemäß einer bevorzugten Ausführungsform enthält die Polymerzusammensetzung 5 bis 25 Gew.%, insbesondere 5 bis 20 Gew.%, bevorzugt 5 bis 15 Gew.%, noch bevorzugter 5 bis 12 Gew.% Polymilchsäure, jeweils bezogen auf das Gesamtgewicht der Polymerzusammensetzung.

Besonders praxisgerechte Ergebnisse stellen sich erfindungsgemäß ein, wenn die Menge an Polymilchsäure so gewählt wird, dass die Gesamtmenge der in der Polymerzusammensetzung enthaltenen Komponenten a) [Stärke und/oder Stärkederivat] und d) [Polymilchsäure] zusammen mehr als 30 Gew.% bezogen auf das Gesamtgewicht der Polymerzusammensetzung ausmachen.

Die erfindungsgemäße Polymerzusammensetzung kann als weiteren Bestandteil ferner ein epoxidgruppenhaltiges Polymer, wobei es sich vorzugsweise um ein epoxidgruppenhaltiges Copolymer handelt, enthalten. Als epoxidgruppenhaltige Polymere bzw. Copolymere kommen insbesondere solche in Frage, die ein Molekulargewicht M_{w} von 1.000 bis 25.000, insbesondere 3.000 bis 10.000, aufweisen.

Vorzugsweise handelt es sich bei dem epoxidgruppen-haltigen Polymer um ein glycidyl(meth)acrylathaltiges Polymer. Ein geeignetes glycidyl(meth)acrylathaltiges Polymer ist beispielsweise ein Copolymer aus (a) Styrol und/oder Ethylen und/oder Methylmethacrylat und/oder Methylacrylat und (b) Glycidyl(meth)acrylat. Besonders gut geeignet als glycidyl(meth)acrylathaltiges Polymer ist ein Copolymer, das ausgewählt ist aus der Gruppe bestehend aus Styrol-Methylmethacrylat-Glycidylmethacrylat, Ethylen-Methylacrylat-Glycidylmethacrylat und Ethylen-Glycidylmethacrylat. Darin ist Glycidyl(meth)acrylat bevorzugt in einer Menge von 1 bis 60 Gew.%, insbesondere 5 bis 55 Gew.%, weiter bevorzugt 45 bis 52 Gew.%, bezogen auf die Gesamtzusammensetzung des glycidyl(meth)acrylathaltigen Polymers, enthalten.

Als epoxidgruppenhaltige Polymere kommen ferner epoxidgruppenhaltige Copolymere auf Basis von Styrol, Ethylen, Acrylsäureester und/oder Methacrylsäureester in Frage.

Das Gemisch enthält vorzugsweise 0,01 bis 5 Gew.%, insbesondere 0,05 bis 3 Gew.%, noch bevorzugter 0,1 bis 2 Gew.% epoxidgruppenhaltiges Polymer, bezogen auf die Gesamtzusammensetzung.

Die erfindungsgemäße Polymerzusammensetzung kann als weiteren Bestandteil ferner weitere Polymere enthalten, wobei es sich vorzugsweise um Polymere handelt, die ausgewählt sind aus der Gruppe bestehend aus Polyvinylacetat, Polyethylenglykol, Polyvinylalkohol, Chitin, Chitosan, Cellulose, Cellulosederivate, Polyester, Polydimethylaminoethylmethacrylat und Mischungen davon. Dabei kommen insbesondere solche Polymere in Frage, die ein Molekulargewicht von 1.000 bis 80.000, bevorzugt von 2.000 bis 50.000, weiter bevorzugt von 3.000 bis 30.000 aufweisen. Das Gemisch enthält vorzugsweise 0,1 bis 5 Gew.%, .%, insbesondere 0,05 bis 3 Gew.%, noch bevorzugter 0,1 bis 2 Gew.% dieser Polymere, bezogen auf die Gesamtzusammensetzung.

Für viele Anwendungszwecke ist es vorteilhaft, wenn die Polymerzusammensetzung gemäß ASTM 6866 mindestens 50 % biobasierten Kohlenstoff enthält.

Die erfindungsgemäße Lehre erlaubt erstmals den Einsatz größerer Mengen an Polyhydroxyalkanoat und Stärke bzw. Stärkederivat in Polymerzusammensetzungen ohne nachteilige Effekte auf die mechanischen Eigenschaften. Erfindungsgemäß kann daher ein Mindestgehalt von 50 % biobasiertem Kohlenstoff gemäß ASTM 6866 selbst dann eingehalten werden, wenn der ebenfalls in der Polymerzusammensetzung enthaltene aliphatisch-aromatische Copolyester im Wesentlichen aus fossilen Rohstoffen hergestellt ist bzw. gemäß ASTM 6866 weniger als 5 %, insbesondere keinen biobasierten Kohlenstoff enthält.

Gemäß einer bevorzugten Ausführungsform stammen mindestens 90 Gew.%, vorzugsweise mindestens 95 Gew.% oder mindestens 98 Gew.% des in der erfindungsgemäßen Polymerzusammensetzung gemäß ASTM 6866 enthaltenen biobasierten Kohlenstoffs aus den Komponenten a) [Stärke bzw. Stärkederivat] und/oder c) [Polyhydroxyalkanoat].

Die erfindungsgemäße Polymerzusammensetzung kann neben den Hauptbestandteilen Stärke bzw. Stärkederivat, aliphatisch-aromatische Copolyester, Polyhydroxyalkanoat und Polymilchsäure noch weitere Bestandteile, insbesondere weitere Polymere und/oder übliche Additive, wie zum Beispiel Verarbeitungshilfsmittel, Weichmacher, Stabilisatoren, Antiflammmittel, Antiblockmittel und/oder Füllstoffe, enthalten.

Als Antiblockmittel kommen vorzugsweise Kieselsäure, Talkum und/oder Calciumcarbonat in Frage. Bevorzugt enthält die Polymerzusammensetzung weniger als 1 Gew.% Antiblockmittel. In einer bevorzugten Ausführungsform werden die Antiblockmittel als feinkörniges Pulver eingesetzt. Besonders bevorzugt haben die Antiblockmittelpartikel eine Größe von weniger als 100 µm, insbesondere von weniger als 70 µm, weiter bevorzugt von weniger als 50 µm, noch bevorzugter von weniger als 30 µm, und am bevorzugtesten von weniger als 15 µm.

Mit der erfindungsgemäßen Lehre ist es möglich, auf die im Stand der Technik vorgesehene Zugabe von Nukleierungsmittel zu verzichten und trotzdem bei gattungsgemäßen, PHA-enthaltenden Polymerzusammensetzungen eine Verschlechterung wichtiger mechanischer Eigenschaften während der Lagerung zu verhindern. Gemäß einer Ausführungsform der Erfindung enthält die Polymerzusammensetzung keine oder nur geringfügige Mengen (z.B. kleiner 10 Gew.% oder kleiner 3 Gew.-% bezogen auf die Gesamtzusammensetzung) Nukleierungsmittel, wie beispielsweise Bornitrid (BN), Talk- (Mg₃[Si₄O₁₀(OH)₂]) und Kalk- (CaCO₃) Partikel, Cyclodextrine, Polyvinylalkohol-Partikel, Terbiumoxid, Saccharin, Thymin, Uracil, Orotsäure und/oder Cyanursäure. Gemäß einer weiteren Ausführungsform der Erfindung enthält die Polymerzusammensetzung weniger als 10 Gew.% CaCO₃ und/oder weniger als 3 Gew.% Talk, jeweils bezogen auf die Gesamtzusammensetzung. Vorzugsweise sind CaCO₃ und/oder Talk in der erfindungsgemäßen Polymerzusammensetzung insgesamt in einer Menge von weniger als 3 Gew.-% bzw. am bevorzugtesten weniger als 1 Gew.%, jeweils bezogen auf die Gesamtzusammensetzung, oder höchstens in Spuren enthalten.

Die Erfindung stellt ferner Verfahren bereit, mit denen es möglich ist, die oben beschriebenen Polymerzusammensetzungen zu erhalten.

Grundsätzlich beinhalten die erfindungsgemäßen Verfahren die folgenden Schritte, wobei die einzelnen Schritte gleichzeitig oder nacheinander und in beliebiger Reihenfolge und Häufigkeit durchgeführt werden können:
(i) Herstellen eines Gemischs enthaltend, bezogen auf das Gesamtgewicht des Gemischs, wenigstens die folgenden Komponenten:
   a) 5 bis 50 Gew.% destrukturierte Stärke und/oder Stärkederivat,
   b) 20 bis 60 Gew.% aliphatisch-aromatischer Copolyester,
   c) 10 bis 50 Gew.% Polyhydroxyalkanoat,
   d) 3 bis 25 Gew.% Polymilchsäure.
(ii) Homogenisieren des Gemischs unter Zuführen von thermischer und/oder mechanischer Energie;
(iii) Einstellen des Wassergehalts des Gemischs, so dass das Endprodukt einen Wassergehalt von kleiner etwa 5 Gew.%, bezogen auf die Gesamtzusammensetzung des Gemischs, aufweist.

In einer bevorzugten Ausführungsform enthält das erfindungsgemäße Verfahren die folgenden Schritte, wobei die einzelnen Schritte gleichzeitig oder nacheinander und in beliebiger Reihenfolge und Häufigkeit durchgeführt werden können:
(i) Herstellen eines Gemischs enthaltend, bezogen auf das Gesamtgewicht des Gemischs, wenigstens die folgenden Komponenten:
   a) 5 bis 50 Gew.% destrukturierte Stärke und/oder Stärkederivat,
   b) 20 bis 60 Gew.% aliphatisch-aromatischer Copolyester,
   c) 10 bis 50 Gew.% Polyhydroxyalkanoat,
   d) 5 bis 25 Gew.% Polymilchsäure.
(ii) Homogenisieren des Gemischs unter Zuführen von thermischer und/oder mechanischer Energie;
(iii) Einstellen des Wassergehalts des Gemischs, so dass das Endprodukt einen Wassergehalt von kleiner etwa 5 Gew.%, bezogen auf die Gesamtzusammensetzung des Gemischs, aufweist.

Bevorzugt werden die Verfahrensschritte in der oben angegebenen Reihenfolge durchgeführt.

Die Herstellung des Gemischs aus den Komponenten der erfindungsgemäßen Zusammensetzung kann einstufig oder mehrstufig erfolgen. Besonders gute Ergebnisse stellen sich in der Praxis ein, wenn die Herstellung des Gemischs in Schritt (i) zweistufig erfolgt, und zwar derart, dass zunächst
- ein Polymerblend A enthaltend die Komponenten a) [destrukturierte Stärke und/oder Stärkederivat] und b) [aliphatisch-aromatischer Copolyester] erhalten wird, dessen Wassergehalt kleiner etwa 5 Gew.%, vorzugsweise kleiner etwa 1 Gew.% bezogen auf das Gesamtgewicht des Polymerblends A, beträgt,
und anschließend
- unter Verwendung des Polymerblends A und Zumischung der Komponententen c) [Polyhydroxyalkanoat] und d) [Polymilchsäure] eine Polymerzusammensetzung wie oben beschrieben hergestellt wird.

Vorzugsweise wird Polymerblend A in einem Extruder hergestellt und als Granulat im anschließenden Schritt eingesetzt. Als Polymerblend A kann auch ein fertiger, kommerziell erhältlicher Polymerblend, wie beispielsweise das unter dem Handelsnamen "BIOPLAST^{®} GF 106/02" von der Firma BIOTEC GmbH & Co. KG in Emmerich (Deutschland) erhältliche Produkte eingesetzt werden.

Erfindungsgemäß ist es bevorzugt, den Wassergehalt der Polymerzusammensetzung möglichst gering zu halten. Vorzugsweise wird der Wassergehalt des Gemischs auf kleiner 3 Gew.%, noch bevorzugter kleiner 1,5 Gew.% und am bevorzugtesten kleiner 1 Gew.%, bezogen auf die Gesamtzusammensetzung, eingestellt.

Hier angegebene Wassergehalte beziehen sich auf das aus dem Extruder austretende Material. Zur Bestimmung des Wassergehalts wird eine Probe schmelzförmiges Extrudat am Düsenausgang beim Austritt aus dem Extruder in einem verschließbaren Gefäß aufgefangen und dieses luftdicht verschlossen. Dabei ist darauf zu achten, dass das Gefäß möglichst vollständig mit Extrudat gefüllt ist, damit der Lufteinschluss in dem Gefäß möglichst gering gehalten wird. Nach Abkühlen des verschlossenen Gefäßes wird dieses geöffnet, eine Probe genommen und der Wassergehalt mittels Karl-Fischer Titration bestimmt.

Vorzugsweise erfolgt die Einstellung des Wassergehalts durch Trocknen während des Homogenisierens. Der Trocknungsvorgang kann beispielsweise durch Entgasen des Gemischs bzw, der Schmelze, zweckmäßigerweise durch Abziehen von Wasserdampf während des Homogenisierens bzw. Extrudierens, erfolgen.

Das erfindungsgemäße Verfahren sieht vor, dass das Gemisch homogenisiert wird. Das Homogenisieren kann durch beliebige, dem auf dem Gebiet der Kunststofftechnik tätigen Fachmann geläufige Maßnahmen erfolgen. Vorzugweise erfolgt das Homogenisieren des Gemischs durch Dispergieren, Rühren, Kneten und/oder Extrudieren. Gemäß einer bevorzugten Ausführungsform der Erfindung wirken bei der Homogenisierung Scherkräfte auf das Gemisch ein. Geeignete Herstellungsverfahren für stärkehaltige thermoplastische Polymere, die auch auf die Herstellung des erfindungsgemäßen polymeren Materials analog anwendbar sind, sind beispielsweise in den Druckschriften EP 0 596 437 B1 und EP 02 203 511 B1 beschrieben.

Gemäß einer bevorzugten Ausführungsform der Erfindung wird das Gemisch während des Homogenisierens (z. B. im Extruder) erwärmt, vorzugsweise auf eine Temperatur von 90 bis 250°C, insbesondere 130 bis 220°C.

Die erfindungsgemäßen Polymerzusammensetzungen eignen sich für die verschiedensten Zwecke. Insbesondere eignen sich die Zusammensetzungen zur Herstellung von Formteilen, Folien oder Fasern. Aufgrund der unterbleibenden oder nur geringfügigen Nachkristallisation eignen sich die erfindungsgemäßen Polymerzusammensetzungen besonders gut zur Folienherstellung. Die Erfindung betrifft ferner auch aus den erfindungsgemäßen Polymerzusammensetzungen hergestellte Formteile, Folien und Fasern.

Erfindungsgemäße Folien können Blas-, Flach- oder Gießfolien sein. Bevorzugte Foliendicken für erfindungsgemäße Blasfolien betragen von 12 bis 100 µm, für erfindungsgemäße Flachfolien von 150 bis 500 µm und für erfindungsgemäße Gießfolien von 10 bis 500 µm.

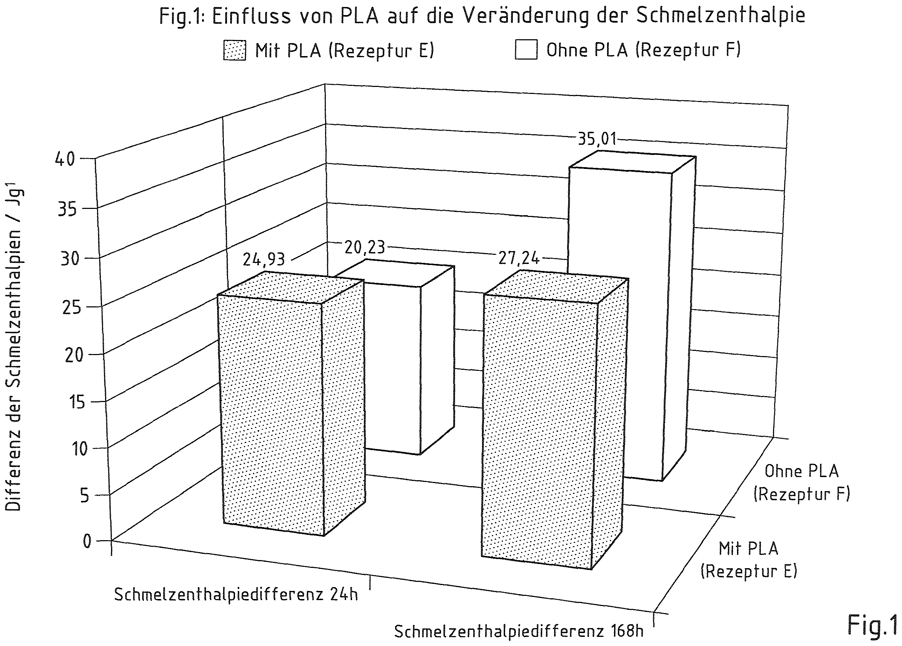

Das Prinzip der Erfindung soll im Folgenden an Beispielen unter Bezugnahme auf die einzige Figur (Fig. 1) näher erläutert werden.

Fig. 1 zeigt einen Vergleich der Zunahme der Schmelzenthalpien, die aus den Schmelzpeaks der DSC Diagramme von Folien der Rezepturen E und F nach unterschiedlichen Zeitpunkten bestimmt wurden.Für die Vergleichs- und Ausführungsbeispiele wurden folgende Materialien verwendet: Polymilchsäure, PLA (INGEO 2003D, NATUREWORKS); Poly(butylenadipat-co-terephthalat), PBAT (ECOFLEX F Blend C 1201, BASF); Poly(hydroxybutyrat-co-hexanoat), PHBH (AONILEX X 151 A, KANEKA); Poly(hydroxybutyrat-co-valerat), PHBV (ENMAT Y 1000 P, TIANAN); native Kartoffelstärke (EMSLANDSTÄRKE); epoxidgruppenhaltiges Copolymer, PMGMA (JONCRYL ADR 4370 S, BASF)

### Beispiel 1 (Vergleichsbeispiel):

Mit einem Zweiwellenextruder (Gleichläufer) des Typs *Werner & Pfleiderer* (*COPERION*) ZSK 40, Schneckendurchmesser 40 mm, L/D = 42, wurden folgende Rezepturen A und B compoundiert (dosierte Anteile in Massenprozent):

**Tab.1: Rezepturen**

| | **A** | **B** |
|---|---|---|
| PBAT | 41,5 | 41,5 |
| PHBH | 29,0 | 14,5 |
| Stärke | 29,5 | 29,5 |
| PHBV | - | 14,5 |

Dabei wurden folgende Compoundierparameter eingehalten:

**Tab.2: Temperaturprofil ZSK 40**

| Zone 1 | Zone 2 | Zone 3 | Zone 4 | Zone 5 | Zone 6 | Zone 7 | Zone 8 | Düse |
|---|---|---|---|---|---|---|---|---|
| 25 °C | 150 °C | 150 °C | 140 °C | 130 °C | 130 °C | 130 °C | 130 °C | 130 °C |

| | |
|---|---|
| Schmelzetemperatur bei Düsenaustritt: | 127 °C (A), 131 °C (B) |
| Drehzahl: | 120 min⁻¹ (A), 160 min⁻¹ (B) |
| Durchsatz: | 40 kg/h |
| Entgasung: | aktiv (Vakuum, Zone 7) |

Die Granulate A und B wurden mit einem Einwellenextruder des Typs *COLLIN 30* (*DR. COLLIN*), Schneckendurchmesser 30 mm, L/D = 33, aufgeschmolzen und zu Blasfolie weiterverarbeitet.

Dabei wurden folgende Verarbeitungsparameter eingestellt:

**Tab.3: Temperaturprofil COLLIN 30**

| Zone 1 | Zone 2 | Zone 3 | Zone 4 | Düse |
|---|---|---|---|---|
| 165 °C | 170 °C | 170 °C | 170 °C | 170 °C |

| | |
|---|---|
| Drehzahl: | 52 min⁻¹ (A), 51 min⁻¹ (B) |
| Ringdüse: | Ø = 80 mm |
| Ringspalt: | 1,05 mm |
| Schmelzetemperatur bei Düsenaustritt: | 157 °C (A), 152 °C (B) |
| Aufblasverhältnis: | 2,5 |
| Liegebreite Folienschlauch: | 310 mm |
| Foliendicke: | 22 µm |

Die mechanischen Eigenschaften der Folien wurden nach einer Lagerzeit von 24 h bei Raumtemperatur und Umgebungsatmosphäre wie folgt bestimmt:

**Tab.4: Mechanische Eigenschaften der Folien nach 24 h**

| Folie | Spez. Dart Drop [g/µm] ASTM D 1709 | Zugfestigkeit [MPa] EN ISO 527 | | Reißdehnung [%] EN ISO 527 | | Reißfestigkeit [N/mm] EN ISO 6383 | | Durchstoßfestigkeit EN 14477 | |
|---|---|---|---|---|---|---|---|---|---|
| | | MD | TD | MD | TD | MD | TD | *ε*_{B} [mm] | *W*_{B} [J/M] |
| A | 5,8 | 24,9 | 24,2 | 460 | 504 | 68 | 144 | 2,6 | 78,7 |
| B | 6,7 | 27,1 | 24,6 | 426 | 481 | 57 | 136 | 2,5 | 80,1 |

In den Folien A und B traten erhebliche Nachkristallisationseffekte in Form von Aushärtung und Versprödung auf, wie ein Vergleich der mechanischen Eigenschaften der Folien direkt nach Herstellung und nach 24 Lagerung zeigte.

Auffällig an den Ergebnissen aus Beispiel 1 (vgl. Tabelle 4) ist insbesondere die niedrige Durchschlagfestigkeit (spez. Dart Drop) und die im Vergleich zur Querrichtung (TD) niedrige Weiterreißfestigkeit in Maschinenrichtung (MD) für beide Rezepturen A und B. Dieses Ergebnis weist auf eine merkliche Orientierung der linearen PHBH-Polymerstränge mit resultierender Nachkristallisation beim Folienblasen hin. Es war vermutet worden, dass eine (ungewollte) Nachkristallisation, welche bekanntermaßen vorzugsweise in chemisch einheitlichen Polymerstrukturen bevorzugt auftritt, in einem Polymergemisch (PHBV/PHBH, 50/50, Rezeptur B) wenn nicht vollständig unterbunden, so doch merklich gebremst werden könnte. Dies war jedoch nicht der Fall. Die Zumischung von PHBV als weiterer Polymerbestandteil konnte die Nachkristallisierung und die dadurch bedingte Versprödung und Brüchigkeit der Folien nicht wirksam bremsen.

### Beispiel 2:

Mit einem Zweiwellenextruder (Gleichläufer) des Typs *Werner* & *Pfleiderer* (*COPERION*) ZSK 40, Schneckendurchmesser 40 mm, L/D = 42, wurde folgende Rezeptur C compoundiert (dosierte Anteile in Massenprozent):

**Tab. 5: Rezepturen**

| | **C** |
|---|---|
| PBAT | 41,5 |
| PHBH | 21,5 |
| Stärke | 29,5 |
| PLA | 7,5 |

Dabei wurden folgende Compoundierparameter eingehalten:

**Tab.6: Temperaturprofil ZSK 40**

| Zone 1 | Zone 2 | Zone 3 | Zone 4 | Zone 5 | Zone 6 | Zone 7 | Zone 8 | Düse |
|---|---|---|---|---|---|---|---|---|
| 25 °C | 150 °C | 150 °C | 140 °C | 130 °C | 130 °C | 130 °C | 130 °C | 130 °C |

| | |
|---|---|
| Schmelzetemperatur bei Düsenaustritt: | 133 °C |
| Drehzahl: | 140 min⁻¹ |
| Durchsatz: | 40 kg/h |
| Entgasung: | aktiv (Vakuum, Zone 7) |
| Wassergehalt: | > 1 Gew.% |

| | |
|---|---|
| (gemessen nach dem Austritt aus dem Extruder) | |

Wie vorher Granulate A und B in Beispiel 1, wurde auch Granulat C mit einem Einwellenextruder des Typs *COLLIN 30* (*DR. COLLIN*), Schneckendurchmesser 30 mm, L/D = 33, aufgeschmolzen und zu Blasfolie weiterverarbeitet.

Dabei wurden folgende Verarbeitungsparameter eingestellt:

**Tab.7: Temperaturprofil COLLIN 30**

| Zone 1 | Zone 2 | Zone 3 | Zone 4 | Düse |
|---|---|---|---|---|
| 165 °C | 170 °C | 170 °C | 170 °C | 170 °C |

| | |
|---|---|
| Drehzahl: | 53 min⁻¹ |
| Ringdüse: | Ø = 80mm |
| Ringspalt: | 1,05 mm |
| Schmelzetemperatur bei Düsenaustritt: | 157 °C |
| Aufblasverhältnis: | 2,5 |
| Liegebreite Folienschlauch: | 310 mm |
| Foliendicke: | 22 µm |

Die mechanischen Eigenschaften der Folie wurden nach einer Lagerzeit von 24 h bei Raumtemperatur und Umgebungsatmosphäre wie folgt bestimmt:

**Tab.8: Mechanische Eigenschaften der Folie nach 24 h**

| Folie | Spez. Dart Drop [g/µm] ASTM D 1709 | Zugfestigkeit [MPa] EN ISO 527 | | Reißdehnung [%] EN ISO 527 | | Reißfestigkeit [N/mm] EN ISO 6383 | | Durchstoßfestigkeit EN 14477 | |
|---|---|---|---|---|---|---|---|---|---|
| | | MD | TD | MD | TD | MD | TD | *ε*_{B} [mm] | *W*_{B} [J/m] |
| C | 8,4 | 20,6 | 19,9 | 545 | 599 | 130 | 147 | 2,2 | 77,0 |

Die in Tabelle 8 zusammengefassten Ergebnisse verdeutlichen die, im Vergleich zu Rezepturen A und B in Vergleichsbeispiel 1, merklich erhöhten Werte für die Durchschlagfestigkeit (spez. Dart Drop) und Weiterreißfestigkeit in Extrusionsrichtung (MD). Offensichtlich bewirkt die Zugabe bereits geringer Mengen PLA zu einem Stärke-basierten, PHBH-enthaltenden Blend einen deutlichen Zuwachs an mechanischer Stabilität. Dies ist überraschend, da reines PLA als relativ sprödes und brüchiges Material, mit hoher Zugfestigkeit und relativ geringer Durchstoß- und Weiterreißfestigkeit, bekannt ist. Offensichtlich sind selbst geringe Anteile PLA in der Lage, die Kristallisation von PHA nach der Verarbeitung merklich zu verzögern bzw. zu unterdrücken.

### Beispiel 3 (zweistufiges Verfahren):

Mit einem Zweiwellenextruder (Gleichläufer) des Typs *Werner & Pfleiderer* (*COPERION*) ZSK 70, Schneckendurchmesser 70 mm, L/D = 36, wurde folgendes Polymerblend A compoundiert (dosierte Anteile in Massenprozent):

**Tab. 9: Rezepturen**

| | **Polymerblend A** |
|---|---|
| PBAT | 57,4 |
| Stärke | 42,6 |

Dabei wurden folgende Compoundierparameter eingehalten:

**Tab.10: Temperaturprofil ZSK 70**

| Zone 1 | Zone 2 | Zone 3 | Zone 4 | Zone 5 | Zone 6 | Zone 7 | Zone 8 | Zone 9 | Zone 10 | Zone 11 | Düse |
|---|---|---|---|---|---|---|---|---|---|---|---|
| 25 °C | 190 °C | 190 °C | 190 °C | 170 °C | 170 °C | 170 °C | 170 °C | 155 °C | 100 °C | 150 °C | 140 °C |

| | |
|---|---|
| Schmelzetemperatur bei Düsenaustritt: | 163 °C |
| Drehzahl: | 205 min⁻¹ |
| Durchsatz: | 400 kg/h |
| Entgasung: | aktiv (Vakuum, Zone 9) |
| Wassergehalt: | < 1 Gew.% |
| (gemessen nach dem Austritt aus dem Extruder) | |

Mit einem Zweiwellenextruder (Gleichläufer) des Typs *Werner & Pfleiderer* (*COPERION*) ZSK 70, Schneclcendurchmesser 70 mm, L/D = 36, wurde anschließend mit dem Granulat des Polymerblends A folgende Rezeptur D compoundiert (dosierte Anteile in Massenprozent):

**Tab. 11: Rezepturen**

| | **D** |
|---|---|
| Polymerblend A | 70,7 |
| PHBH | 21,8 |
| PLA | 6,6 |
| PMGMA | 0,9 |

Dabei wurden folgende Compoundierparameter eingehalten:

**Tab.12: Temperaturprofil ZSK 70**

| Zone 1 | Zone 2 | Zone 3 | Zone 4 | Zone 5 | Zone 6 | Zone 7 | Zone 8 | Zone 9 | Zone 10 | Düse |
|---|---|---|---|---|---|---|---|---|---|---|
| 25 °C | 160 °C | 160 °C | 130 °C | 130 °C | 120 °C | 140 °C | 170 °C | 140 °C | 140 °C | 150 °C |

| | |
|---|---|
| Schmelzetemperatur bei Düsenaustritt: | 138 °C |
| Drehzahl: | 180 min⁻¹ |
| Durchsatz: | 300 kg/h |
| Entgasung: | aktiv (Vakuum, Zone 8) |
| Wassergehalt: | < 1 Gew.% |

(gemessen nach dem Austritt aus dem Extruder)

Wie vorher Granulate A, B und C in den Beispielen 1 und 2, wurde auch Granulat D mit einem Einwellenextruder des Typs *COLLIN 30* (*DR. COLLIN*)*,* Schneckendurchmesser 30 mm, L/D = 33, aufgeschmolzen und zu Blasfolie weiterverarbeitet.

Dabei wurden folgende Verarbeitungsparameter eingestellt:

**Tab.13: Temperaturprofil COLLIN 30**

| Zone 1 | Zone 2 | Zone 3 | Zone 4 | Düse |
|---|---|---|---|---|
| 165 °C | 170 °C | 170 °C | 170 °C | 170 °C |

| | |
|---|---|
| Drehzahl: | 53 min⁻¹ |
| Ringdüse: | Ø = 80 mm |
| Ringspalt: | 1,05 mm |
| Schmelzetemperatur bei Düsenaustritt: | 157 °C |
| Aufblasverhältnis: | 2,5 |
| Liegebreite Folienschlauch: | 310 mm |
| Foliendicke: | 22 µm |

Die mechanischen Eigenschaften der Folie wurden nach einer Lagerzeit von 24 h bei Raumtemperatur und Umgebungsatmosphäre wie folgt bestimmt:

**Tab.14: Mechanische Eigenschaften der Folie nach 24 h**

| Folie | Spez. Dart Drop [g/µm] | Zugfestigkeit [MPa] | | Reißdehnung [%] | | Reißfestigkeit [N/mm] | | Durchstoßfestigkeit | |
|---|---|---|---|---|---|---|---|---|---|
| | | EN ISO 527 | | EN ISO 527 | | EN ISO 6383 | | EN 14477 | |
| | ASTM D 1709 | MD | TD | MD | TD | MD | TD | *ε*_{B} [mm] | *W*_{B} [J/m] |
| D | 9,6 | 28,2 | 24,6 | 202 | 458 | 21,83 | 43,16 | NA | NA |

Die in Tabelle 14 zusammengefassten Ergebnisse zeigen gegenüber Vergleichsbeispiel 1 eine deutlich erhöhte Duchschlagsfestigkeit (spez. Dart Drop) sowie eine höhere Zugfestigkeit in Extrusionsrichtung (MD). Gegenüber Beispiel 2 fallen eine erhöhte Durchschlagsfestigkeit (spez. Dart Drop) und eine deutlich erhöhte Zugfestigkeit, vor allem in Extrusionsrichtung (MD), auf. Gleichzeitg reduzieren sich die Werte für die Reißdehnung sowie die Weiterreißfestigkeit. Offensichtlich können durch die Zugabe geringer Mengen eines epoxidgruppenhaltigen Copolymers gezielt bestimmte mechanische Eigenschaften modifiziert werden.

### Beispiel 4:

Der Einfluss von Polymilchsäure auf den zeitlichen Verlauf der Kristallinität von Folien aus der erfindungsgemäßen Polymerzusammensetzung im Vergleich zu Folien ohne Polymilchsäure wurde mittels DSC-Messung auf dem Gerät DSC-50 Q von SHIMADZU untersucht. Dabei wurden die Proben jeweils von 20°C auf 220°C mit einer Heizrate von 10°C/Minute aufgeheizt.

Hierfür wurden folgende Rezepturen unter Verwendung des Polymerblends A aus Beispiel 3 unter identischen Bedingungen wie in Beispiel 3 compoundiert:

| | **E** | **F** |
|---|---|---|
| Polymerblend A | 70,7 | 70,7 |
| PHBH | 21,8 | 28,4 |
| PLA | 6,6 | - |
| PMGMA | 0,9 | 0,9 |

Unter identischen Bedingungen wie in Beispiel 3 wurden die Granulate E und F dann zu Blasfolien mit einer Folienstärke von je 22 µm verarbeitet.

DSC Diagramme wurden unter den oben erwähnten Bedingungen von Folien aus den Rezepturen E (mit PLA) und F (ohne PLA) unmittelbar nach der Herstellung der Folien, 24 Stunden nach der Herstellung der Folien und 168 Stunden nach der Herstellung der Folien gemessen. Anschließend wurde in jedem Diagramm die Fläche des Schmelzpeaks durch Integration bestimmt. Diese Fläche entspricht der Schmelzenthalpie. Für Rezeptur E wurden die Differenzen zwischen der Schmelzenthalpie nach 24 Stunden und unmittelbar nach der Herstellung sowie zwischen der Schmelzenthalpie nach 168 Stunden und unmittelbar nach der Herstellung ermittelt, indem der Wert der Schmelzenthalpie unmittelbar nach der Herstellung von dem Wert der Schmelzenthalpie nach 24 Stunden bzw. nach 168 Stunden abgezogen wurde. Dieselben Differenzen wurden danach aus den integrierten Flächen der Schmelpeaks, also den Schmelzenthalpien, der Rezeptur F ermittelt. Diese Differenzen entsprechen der Veränderung der Schmelzenthalpie der jeweiligen Rezeptur innerhalb der ersten 24 Stunden bzw. 168 Stunden. Ein Vergleich dieser Differenzen ist in Figur 1 dargestellt. In Figur 1 sind in der vorderen Reihe die Differenzen der Schmelzenthalpien nach den ersten 24 Stunden und nach den ersten 168 Stunden der Rezeptur E dargestellt. In der hinteren Reihe sind die Differenzen der Schmelzenthalpien nach den ersten 24 Stunden und nach den ersten 168 Stunden der Rezeptur F dargestellt. Die ermittelten Werte sind über die jeweiligen Balken geschrieben. Zunächst fällt auf, dass die Schmelzenthalpien zunehmen. Auffällig ist weiterhin, dass sich die Zunahme der Schmelzenthalpie für Rezeptur E zwischen den ersten 24 Stunden und den ersten 168 Stunden kaum verändert, während sich die Zunahme der Schmelzenthalpie für Rezeptur F zwischen den ersten 24 Stunden und den ersten 168 Stunden fast verdoppelt. Ohne sich auf eine bestimmte Theorie festlegen zu wollen, kann dies darauf zurückgeführt werden, dass die Nachkristallisation in erfindungsgemäßen Polymerzusammensetzungen durch den Zusatz von PLA im Vergleich zu Polymerzusammensetzungen ohne PLA reduziert wird.

Die Erfindung ist vorstehend anhand von Ausführungsbeispielen exemplarisch beschrieben worden. Dabei versteht sich, dass die Erfindung nicht auf die beschriebenen Ausführungsbeispiele beschränkt ist. Vielmehr ergeben sich für den Fachmann im Rahmen der Erfindung vielfältige Abwandlungs- und Modifikationsmöglichkeiten und der Schutzumfang der Erfindung wird insbesondere durch die nachfolgenden Patentansprüche festgelegt.

## Patentansprüche

1. Polymerzusammensetzung enthaltend, bezogen auf das Gesamtgewicht der Polymerzusammensetzung, wenigstens die folgenden Komponenten:
a) 5 bis 50 Gew.% destrukturierte Stärke und/oder Stärkederivat,
b) 20 bis 60 Gew.% aliphatisch-aromatischer Copolyester,
c) 10 bis 50 Gew.% Polyhydroxyalkanoat,
d) 3 bis 25 Gew.% Polymilchsäure.

2. Polymerzusammensetzung nach Anspruch 1, **dadurch gekennzeichnet, dass** die Polymerzusammensetzung 10 bis 50 Gew.%, 15 bis 50 Gew.%, 20 bis 50 Gew.%, 25 bis 45 Gew.% oder 25 bis 40 Gew.% destrukturierte Stärke und/oder Stärkederivat, jeweils bezogen auf das Gesamtgewicht der Polymerzusammensetzung, enthält.

3. Polymerzusammensetzung nach Anspruch 1 oder 2, **dadurch gekennzeichnet, dass** die Polymerzusammensetzung 30 bis 58 Gew.%, 30 bis 55 Gew.% oder 30 bis 50 Gew.% aliphatisch-aromatischen Copolyester, jeweils bezogen auf das Gesamtgewicht der Polymerzusammensetzung, enthält.

4. Polymerzusammensetzung nach einem der vorstehenden Ansprüche, **dadurch gekennzeichnet, dass** die Polymerzusammensetzung 15 bis 45 Gew.%, 15 bis 40 Gew.% oder 15 bis 30 Gew.% Polyhydroxyalkanoat, jeweils bezogen auf das Gesamtgewicht der Polymerzusammensetzung, enthält und/oder 5 bis 25 Gew.%, 5 bis 20 Gew.%, insbesondere 5 bis 15 Gew.%, noch bevorzugter 5 bis 12 Gew.% Polymilchsäure, jeweils bezogen auf das Gesamtgewicht der Polymerzusammensetzung, enthält.

5. Polymerzusammensetzung nach einem der vorstehenden Ansprüche, **dadurch gekennzeichnet, dass** die in der Polymerzusammensetzung enthaltene Menge an Komponenten c) mindestens 20 Gew.%, bezogen auf die Gesamtmenge der in der Polymerzusammensetzung enthaltenen Komponenten b) und c), beträgt und/oder die Gesamtmenge der in der Polymerzusammensetzung enthaltenen Komponenten a) Stärke und/oder Stärkederivat und d) Polymilchsäure zusammen mehr als 30 Gew.% bezogen auf das Gesamtgewicht der Polymerzusammensetzung ausmacht.

6. Polymerzusammensetzung nach einem der vorstehenden Ansprüche, **dadurch gekennzeichnet, dass** die Polymerzusammensetzung gemäß ASTM 6866 mindestens 50 % biobasierten Kohlenstoff enthält und/oder gemäß EN 13432 biologisch abbaubar, insbesondere vollständig biologisch abbaubar, ist.

7. Polymerzusammensetzung nach einem der vorstehenden Ansprüche, **dadurch gekennzeichnet, dass** das Polyhydroxyalkanoat sich wiederholende Monomereinheiten der Formel (1) umfasst
[-O-CHR-CH₂-CO-] (1) ,
wobei R eine Alkylgruppe der Formel CₙH₂ₙ₊₁ bedeutet und n eine Zahl von 1 bis 15 oder von 1 bis 6 ist, insbesondere dass das Polyhydroxyalkanoat ausgewählt ist aus PHB, PHBV und PHBH oder eines oder mehrere dieser Polymere enthält.

8. Polymerzusammensetzung nach einem der vorstehenden Ansprüche, **dadurch gekennzeichnet, dass** als aliphatisch-aromatischer Copolyester ein statistischer Copolyester auf Basis von 1,4-Butandiol, Adipinsäure und/oder Sebacinsäure und Terephthalsäure bzw. Terephthalsäurederivat, insbesondere Dimethylterephthalat DMT, eingesetzt wird.

9. Polymerzusammensetzung nach einem der vorstehenden Ansprüche, **dadurch gekennzeichnet, dass** die Polymerzusammensetzung keine oder weniger als 5 Gew.% Kohlenstoff-enthaltende Weichmacher, insbesondere Glycerin oder Sorbitol, enthält.

10. Verfahren zur Herstellung einer Polymerzusammensetzung nach einem der Ansprüche 1 bis 9, **gekennzeichnet durch**:
(i) Herstellen eines Gemischs enthaltend, bezogen auf das Gesamtgewicht des Gemischs, wenigstens die folgenden Komponenenten:
a) 5 bis 50 Gew.% destrukturierte Stärke und/oder Stärkederivat,
b) 20 bis 60 Gew.% aliphatisch-aromatischer Copolyester,
c) 10 bis 50 Gew.% Polyhydroxyalkanoat,
d) 3 bis 25 Gew.% Polymilchsäure.
(ii) Homogenisieren des Gemischs unter Zuführen von thermischer und/oder mechanischer Energie;
(iii) Einstellen des Wassergehalts des Gemischs, so dass das Endprodukt einen Wassergehalt von kleiner etwa 5 Gew.%, bezogen auf die Gesamtzusammensetzung des Gemischs, aufweist.

11. Verfahren nach Anspruch 10, **dadurch gekennzeichnet, dass** das Homogenisieren des Gemischs durch Dispergieren, Einwirken von Scherkräften auf das Gemisch, Rühren, Kneten und/oder Extrudieren erfolgt und/oder das Gemisch beim Homogenisieren bzw. Extrudieren auf eine Temperatur von 90 bis 250°C, insbesondere 130 bis 220°C, erwärmt wird.

12. Verfahren nach einem der Ansprüche 10 oder 11, **dadurch gekennzeichnet, dass** der Wassergehalt des Gemischs auf kleiner 3 Gew.%, noch bevorzugter kleiner 1,5 Gew.% und am bevorzugtesten kleiner 1 Gew.%, bezogen auf die Gesamtzusammensetzung, eingestellt wird.

13. Verfahren nach einem der Ansprüche 10 bis 12, **dadurch gekennzeichnet, dass** der Wassergehalt des Gemischs während des Homogenisierens eingestellt wird und/oder der Wassergehalt des Gemischs durch Entgasen des Gemischs, insbesondere durch Entgasen der Schmelze, eingestellt wird und/oder der Wassergehalt des Gemischs durch Trocknen des Gemischs während des Homogenisierens bzw. Extrudierens eingestellt wird.

14. Verfahren nach einem der Ansprüche 10 bis 13, **dadurch gekennzeichnet, dass** das die Herstellung des Gemischs in Schritt (i) zweistufig erfolgt, und zwar derart, dass zunächst in
- ein Polymerblend A enthaltend die Komponenten a) und b) erhalten wird, wobei der Wassergehalt kleiner etwa 5 Gew.%, bezogen auf das Gesamtgewicht des Polymerblends A, beträgt,
und anschließend
- unter Verwendung des Polymerblends A und Zumischung der Komponenten c) und d) eine Polymerzusammensetzung nach einem der Ansprüche 1 bis 20 hergestellt wird.

15. Polymerzusammensetzung erhältlich nach den Verfahren gemäß einem der Ansprüche 10 bis 14.

16. Verwendung einer Polymerzusammensetzung nach einem der Ansprüche 1 bis 9 oder 15 zur Herstellung von Formteilen, Folien oder Fasern.

17. Formteile, Folien oder Fasern, enthaltend eine Polymerzusammensetzung nach einem der der Ansprüche 1 bis 9 oder 15.

## Claims

1. Polymer composition comprising, based on the total weight of the polymer composition, at least the following components:
a) 5 to 50 wt% of destructurized starch and/or starch derivative,
b) 20 to 60 wt% of aliphatic-aromatic copolyester,
c) 10 to 50 wt% of polyhydroxyalkanoate,
d) 3 to 25 wt% of polylactic acid.

2. Polymer composition according to Claim 1, **characterized in that** the polymer composition comprises 10 to 50 wt%, 15 to 50 wt%, 20 to 50 wt%, 25 to 45 wt% or 25 to 40 wt% of destructurized starch and/or starch derivative in each case based on the total weight of the polymer composition.

3. Polymer composition according to Claim 1 or 2, **characterized in that** the polymer composition comprises 30 to 58 wt%, 30 to 55 wt% or 30 to 50 wt% of aliphatic-aromatic copolyester in each case based on the total weight of the polymer composition.

4. Polymer composition according to any of the preceding claims, **characterized in that** the polymer composition comprises 15 to 45 wt%, 15 to 40 wt%, or 15 to 30 wt% of polyhydroxyalkanoate in each case based on the total weight of the polymer composition and/or comprises 5 to 25 wt%, 5 to 20 wt%, in particular 5 to 15 wt%, yet more preferably 5 to 12 wt% of polylactic acid in each case based on the total weight of the polymer composition.

5. Polymer composition according to any of the preceding claims, **characterized in that** the amount of component c) present in the polymer composition is at least 20 wt% based on the total amount of the components b) and c) present in the polymer composition and/or the total amount of the components a) starch and/or starch derivative and d) polylactic acid present in the polymer composition together comprise more than 30 wt% based on the total weight of the polymer composition.

6. Polymer composition according to any of the preceding claims, **characterized in that** the polymer composition comprises at least 50% of bio-based carbon according to ASTM 6866 and/or is biodegradable, in particular completely biodegradable, according to EN 13432.

7. Polymer composition according to any of the preceding claims, **characterized in that** the polyhydroxyalkanoate comprises repeating monomer units of formula [1]
[-O-CHR-CH₂-CO-] (1),
wherein R represents an alkyl group of formula CₙH₂ₙ₊₁ and n is a number from 1 to 15 or from 1 to 6, in particular **in that** the polyhydroxyalkanoate is selected from PHB, PHBV and PHBH or comprises one or more of these polymers.

8. Polymer composition according to any of the preceding claims, **characterized in that** the aliphatic-aromatic copolyester employed is a random copolyester based on 1,4-butanediol, adipic acid and/or sebacic acid and terephthalic acid and/or terephthalic acid derivative, in particular dimethyl terephthalate DMT.

9. Polymer composition according to any of the preceding claims, **characterized in that** the polymer composition does not comprise any or comprises less than 5 wt% of carbon-containing plasticizers, in particular glycerol or sorbitol.

10. Process for producing a polymer composition according to any of Claims 1 to 9, **characterized by**
(i) producing a mixture comprising, based on the total weight of the mixture, at least the following components:
a) 5 to 50 wt% of destructurized starch and/or starch derivative,
b) 20 to 60 wt% of aliphatic-aromatic copolyester,
c) 10 to 50 wt% of polyhydroxyalkanoate,
d) 3 to 25 wt% of polylactic acid.
(ii) homogenizing the mixture by supplying thermal and/or mechanical energy;
(iii) adjusting the water content of the mixture such that the end product has a water content of less than about 5 wt% based on the total composition of the mixture.

11. Process according to Claim 10, **characterized in that** the homogenizing of the mixture is effected by dispersing, the action of shear forces on the mixture, stirring, kneading and/or extruding and/or the mixture is heated to a temperature of 90 to 250°C, in particular 130 to 220°C, during the homogenizing and/or extruding.

12. Process according to either of Claims 10 and 11, **characterized in that** the water content of the mixture is adjusted to less than 3 wt%, still more preferably less than 1.5 wt% and most preferably less than 1 wt%, based on the total composition.

13. Process according to any of Claims 10 to 12, **characterized in that** the water content of the mixture is adjusted during the homogenizing and/or the water content of the mixture is adjusted by degassing the mixture, in particular by degassing the melt, and/or the water content of the mixture is adjusted by drying the mixture during the homogenizing and/or extruding.

14. Process according to any of Claims 10 to 13, **characterized in that** the producing of the mixture in step (i) is effected in two stages, namely such that initially in
- a polymer blend A comprising the components a) and b) is obtained, wherein the water content is less than about 5 wt% based on the total weight of the polymer blend A,
and subsequently
- by using the polymer blend A and admixing the components c) and d) a polymer composition according to any of Claims 1 to 20 is produced.

15. Polymer composition obtainable by the processes according to any of Claims 10 to 14.

16. Use of a polymer composition according to any of Claims 1 to 9 or 15 for producing mouldings, films or fibres.

17. Mouldings, films or fibres comprising a polymer composition according to any of Claims 1 to 9 or 15.

## Revendications

1. Composition polymère contenant, par rapport au poids total de la composition polymère, au moins les composants suivants :
a) 5 à 50 % en poids d'amidon déstructuré et/ou d'un dérivé d'amidon,
b) 20 à 60 % en poids d'un copolyester aliphatique-aromatique,
c) 10 à 50 % en poids de polyhydroxyalcanoate,
d) 3 à 25 % en poids d'acide polylactique.

2. Composition polymère selon la revendication 1, **caractérisée en ce que** la composition polymère contient 10 à 50 % en poids, 15 à 50 % en poids, 20 à 50 % en poids, 25 à 45 % en poids ou 25 à 40 % en poids d'amidon déstructuré et/ou de dérivé d'amidon déstructuré, à chaque fois par rapport au poids total de la composition polymère.

3. Composition polymère selon la revendication 1 ou 2, **caractérisée en ce que** la composition polymère contient 30 à 58 % en poids, 30 à 55 % en poids ou 30 à 50 % en poids de copolyester aliphatique-aromatique, à chaque fois par rapport au poids total de la composition polymère.

4. Composition polymère selon l'une quelconque des revendications précédentes, **caractérisée en ce que** la composition polymère contient 15 à 45 % en poids, 15 à 40 % en poids ou 15 à 30 % en poids de polyhydroxyalcanoate, à chaque fois par rapport au poids total de la composition polymère, et/ou 5 à 25 % en poids, 5 à 20 % en poids, notamment 5 à 15 % en poids, de manière encore davantage préférée 5 à 12 % en poids d'acide polylactique, à chaque fois par rapport au poids total de la composition polymère.

5. Composition polymère selon l'une quelconque des revendications précédentes, **caractérisée en ce que** la quantité de composants c) contenue dans la composition polymère est d'au moins 20 % en poids, par rapport à la quantité totale des composants b) et c) contenus dans la composition polymère, et/ou la quantité totale des composants a) amidon et/ou dérivé d'amidon et d) acide polylactique ensemble contenus dans la composition polymère est de plus de 30 % en poids, par rapport au poids total de la composition polymère.

6. Composition polymère selon l'une quelconque des revendications précédentes, **caractérisée en ce que** la composition polymère contient au moins 50 % de carbone biologique selon ASTM 6866 et/ou est biodégradable, notamment entièrement biodégradable, selon EN 13432.

7. Composition polymère selon l'une quelconque des revendications précédentes, **caractérisée en ce que** le polyhydroxyalcanoate comprend des unités monomères de répétition de formule (1)
[-O-CHR-CH₂-CO-] (1)
dans laquelle R signifie un groupe alkyle de formule CₙH₂ₙ₊₁ et n est un nombre de 1 à 15 ou de 1 à 6, notamment **en ce que** le polyhydroxyalcanoate est choisi parmi le PHB, le PHBV et le PHBH ou contient un ou plusieurs de ces polymères.

8. Composition polymère selon l'une quelconque des revendications précédentes, **caractérisée en ce qu'**un copolyester statistique à base de 1,4-butanediol, d'acide adipique et/ou d'acide sébacique et d'acide téréphtalique et/ou d'un dérivé de l'acide téréphtalique, notamment le téréphtalate de diméthyle DMT, est utilisé en tant que copolyester aliphatique-aromatique.

9. Composition polymère selon l'une quelconque des revendications précédentes, **caractérisée en ce que** la composition polymère ne contient pas ou contient moins de 5 % en poids de plastifiants contenant du carbone, notamment de glycérine ou de sorbitol.

10. Procédé de fabrication d'une composition polymère selon l'une quelconque des revendications 1 à 9, **caractérisé par**:
(i) fabrication d'un mélange contenant, par rapport au poids total du mélange, au moins les composants suivants :
a) 5 à 50 % en poids d'amidon déstructuré et/ou d'un dérivé d'amidon déstructuré,
b) 20 à 60 % en poids d'un copolyester aliphatique-aromatique,
c) 10 à 50 % en poids de polyhydroxyalcanoate,
d) 3 à 25 % en poids d'acide polylactique,
(ii) homogénéisation du mélange avec apport d'énergie thermique et/ou mécanique;
(iii) ajustement de la teneur en eau du mélange de sorte que le produit final présente une teneur en eau inférieure à environ 5 % en poids, par rapport à la composition totale du mélange.

11. Procédé selon la revendication 10, **caractérisé en ce que** l'homogénéisation du mélange a lieu par dispersion, action de forces de cisaillement sur le mélange, agitation, malaxage et/ou extrusion, et/ou le mélange est porté à une température de 90 à 250 °C, notamment de 130 à 220 °C, lors de l'homogénéisation ou de l'extrusion.

12. Procédé selon l'une quelconque des revendications 10 ou 11, **caractérisé en ce que** la teneur en eau du mélange est ajustée à moins de 3 % en poids, de manière encore davantage préférée à moins de 1,5 % en poids et de manière la plus préférée à moins de 1 % en poids, par rapport à la composition totale.

13. Procédé selon l'une quelconque des revendications 10 à 12, **caractérisé en ce que** la teneur en eau du mélange est ajustée pendant l'homogénéisation et/ou la teneur en eau du mélange est ajustée par dégazage du mélange, notamment par dégazage de la masse fondue, et/ou la teneur en eau du mélange est ajustée par séchage du mélange pendant l'homogénéisation et/ou l'extrusion.

14. Procédé selon l'une quelconque des revendications 10 à 13, **caractérisé en ce que** la fabrication du mélange à l'étape (i) a lieu en deux étapes, et ce tout d'abord,
- en obtenant un mélange de polymère A contenant les composants a) et b), la teneur en eau étant inférieure à environ 5 % en poids, par rapport au poids total du mélange polymère A,
et ensuite
- en fabriquant une composition polymère selon l'une quelconque des revendications 1 à 20 en utilisant le mélange de polymère A et en incorporant les composants c) et d).

15. Composition polymère pouvant être obtenue par les procédés selon l'une quelconque des revendications 10 à 14.

16. Utilisation d'une composition polymère selon l'une quelconque des revendications 1 à 9 ou 15 pour la fabrication de pièces moulées, de films ou de fibres.

17. Pièces moulés, films ou fibres, contenant une composition polymère selon l'une quelconque des revendications 1 à 9 ou 15.
